# EUROPÄISCHE PATENTSCHRIFT

(11) **EP 1 021 318 B1**
(45) Veröffentlichungstag und Bekanntmachung des Hinweises auf die Patenterteilung: **02.01.2002**
(21) Anmeldenummer: 98952685.0
(22) Anmeldetag: 01.10.1998
(51) Int. Cl.: B60R 22/34, B65H 75/28

(54) **SICHERHEITSGURTAUFROLLER MIT EINEM MIT DEM GURTBAND UNLÖSBAR VERBUNDENEM GURTSTIFT**
SAFETY BELT WINDER WITH NONDETACHABLE PIN FASTENED TO THE BELT STRAP
ENROULEUR DE CEINTURE DE SECURITE MUNI D'UNE BROCHE SOLIDARISEE DE MANIERE INAMOVIBLE A LA SANGLE

(30) Priorität: 11.10.1997 DE 19745062
(43) Veröffentlichungstag der Anmeldung: 26.07.2000
(73) Patentinhaber: AUTOLIV DEVELOPMENT AB, 44783 Vargarda (SE)
(72) Erfinder: RÖDEL, Wolfgang, D-25335 Neuendorf (DE); FISCHER, Manfred, D-25348 Glückstadt (DE); DEEG, Frank, D-22523 Hamburg (DE)
(74) Vertreter: Müller, Karl-Ernst, Dr., Dipl.-Ing.
(86) Internationale Anmeldenummer: EP9806263
(87) Internationale Veröffentlichungsnummer: WO9919176

(56) Entgegenhaltungen:
- DE-A- 2 802 031
- FR-A- 2 452 941
- GB-A- 2 174 590
- US-A- 4 254 921

## Beschreibung

Die Erfindung betrifft einen Sicherheitsgurtaufroller mit Gurtaufwickelwelle und daran festgelegtem Gurtband, wobei das endseitig in eine Schlaufe gelegte Gurtband mit seiner Schlaufe durch einen in dem Wellenkörper ausgebildeten Wellenschlitz geführt und mittels eines in die Schlaufe eingelegten, einen eckigen Querschnitt aufweisenden und in eine in die Kontur des Wellenkörpers eingezogene Ausnehmung eingelegten Gurtstiftes festgelegt ist, und wobei die Ausnehmung des Wellenkörpers zwei winklig zum Wellenschlitz ausgerichtete und in ihrem Winkel auf die anliegenden Flächen des in der Ausnehmung mit einer zum Wellenschlitz weisenden Ecke eingelegten Gurtstiftes angepaßte Begrenzungsflächen zur verdrehgesicherten Festlegung des Gurtstiftes aufweisen.

Ein Sicherheitsgurtaufroller mit den vorgenannten Merkmalen ist in der gattungsbildenden DE 195 04 506 A1 beschrieben; der bereits einen eckigen Querschnitt aufweisende Gurtstift ist verdrehgesichert in der Ausnehmung im Wellenkörper festgelegt, wobei die Festlegung des Gurtbandes an dem Gurtstift durch die den Gurtstift umschlingende Gurtbandschlaufe erfolgt. Diese Gurtbandschlaufe wird durch Vernähen des freien und wieder in den Wellenschlitz zurückgeführten Endes der Gurtbandschlaufe mit demjenigen Gurtbandtrum hergestellt, an dem bei Benutzung des Sicherheitsgurtaufrollers die Gurtbandlast angreift.

Mit dieser Gestaltung ist der Nachteil verbunden, daß die Herstellung einer Naht zur Bildung einer ausreichend belastbaren Gurtbandschlaufe bei der Herstellung des Sicherheitsgurtaufrollers aufwendig ist, wobei die Naht auch eine Verdickung der Gurtbandlagen mit sich bringt, was das Einfädeln der Gurtbandschlaufe in den Wellenschlitz erschwert.

Der Erfindung liegt daher die Aufgabe zugrunde, bei einem Sicherheitsgurtaufroller mit den eingangs genannten Merkmalen die Festlegung der Gurtbandschlaufe an dem Wellenstift in ihrer Herstellung zu vereinfachen.

Die Lösung dieser Aufgabe ergibt sich einschließlich vorteilhafter Ausgestaltungen und Weiterbildungen der Erfindung aus dem Inhalt der Patentansprüche, welcher dieser Beschreibung nachgestellt sind.

Die Erfindung sieht in ihrem Grundgedanken vor, daß der Gurtstift an seiner vom in den Wellenschlitz zurückgeführten freien Ende der Gurtbandschlaufe umschlungenen Fläche eine unlösbare Verbindung mit dem Gurtband aufweist und die die Verbindung mit dem Gurtband aufweisende Fläche an der dem die Gurtbandlast aufnehmenden Gurtbandtrum abgewandten Begrenzungsfläche der Ausnehmung anliegt.

Mit der Erfindung ist der Vorteil verbunden, daß die Herstellung einer unlösbaren Verbindung, insbesondere einer Verschweißung oder einer Verklebung, zwischen dem Gurtband und einem vorzugsweise aus Kunststoff bestehenden Gurtstift fertigungstechnisch einfacher durchzuführen ist. Da die die gesonderte unlösbare Verbindung zwischen Gurtband und Wellenstift aufnehmende Fläche an der dem die Gurtbandlast aufnehmenden Gurtbandtrum abgewandten Begrenzungsfläche der Ausnehmung zur Halterung des Wellenstiftes angeordnet ist, ist in vorteilhafter Weise die besondere Verbindung bei auftretender Gurtbandlast geringer beansprucht, weil die an dem zugeordneten Gurtbandtrum auftretende Last aufgrund der Umschlingung des Gurtstiftes durch das Gurtband bis zur Verbindungsfläche nach der durch die Seilreibungsformel bestimmten Gesetzmäßigkeit entsprechend verringert ist. Eine weitere Verringerung der Beanspruchung der Verbindung zwischen Gurtband und Gurtstift ist dadurch gegeben, daß bei einer auftretenden Gurtbandlast der Gurtstift gegen die Begrenzungsflächen der Ausnehmung im Wellenkörper gezogen wird, so daß auf der dem belasteten Gurtbandtrum zugeordneten Begrenzungsfläche es zu einer Klemmwirkung des Gurtbandes zwischen der anliegenden Fläche des Gurtstiftes und der Begrenzungsfläche des Wellenkörpers kommt.

Nach Ausführungsbeispielen der Erfindung kann der Gurtstift einen dreieckigen Querschnitt, einen quadratischen Vierkantquerschnitt oder einen rautenförmigen Querschnitt aufweisen, wobei bei letzterem die Orientierung der den spitzen Winkel einschließenden Ecke der Raute zum Wellenschlitz des Wellenkörpers gegeben ist. Darüber hinaus können sämtliche asymetrischen bzw. symetrischen Gurtstiftquerschnitte Verwendung finden, bei denen im Zusammenwirken mit der Festlegung des Gurtstiftes in der Gurtaufwickelwelle eine Drehmomentaufnahme realisierbar ist.

Nach einem Ausführungsbeispiel der Erfindung kann vorgesehen sein, daß mehrere Flächen des Gurtstiftes eine unlösbare Verbindung mit dem ihn umschlingenden Gurtband aufweisen.

Die Sicherheit der Halterung der Gurtbandschlaufe an dem Gurtstift kann dadurch verbessert werden, daß das in den Wellenschlitz zurückgeführte freie Ende der Gurtbandschlaufe eine unlösbare Verbindung mit dem die Gurtbandlast aufnehmenden Gurtbandtrum im Bereich einer beiderseits der Längsmittenlinie des Gurtbandes unter Aussparung von längslaufenden Bereichen angeordneten Teilfläche aufweist, wogegen die die Verbindung aufweisenden Flächen jeweils eine etwas geringere Zugfestigkeit aufweisen.

Eine weitere alternative Ausführungsform der Erfindung sieht vor, daß der Gurtstift mit einem fahnenartigen Fortsatz versehen ist, der in den Wellenschlitz zwischen den beiden Gurtbandlagen angeordnet ist. Dieser Fortsatz dient dann der Anbringung der unlösbaren Verbindung mit dem freien Ende des Gurtbandes, und zwar anstelle der unlösbaren Verbindung des Gurtbandes mit dem Stift oder aber zusätzlich dazu, sowie zur weiteren Verdrehsicherung und Abstützung des Gurtstiftes in der Ausnehmung des Wellenkörpers. Hierbei kann ebenfalls zusätzlich vorgesehen sein, daß der fahnenartige Fortsatz an einer beiderseits der Längsmittenlinie des Gurtbandes unter Aussparung von längslaufenden äußeren Randbereichen angeordneten Teilfläche eine unlösbare Verbindung mit dem Gurtband aufweist.

Die Festlegung des Gurtstiftes in dem Wellenkörper kann weiterhin dadurch verbessert werden, daß in einer an sich bekannten Weise der Gurtstift an seinen beiden äußeren Enden über die Breite der im Wellenkörper befindlichen Ausnehmung seitlich vorstehende Ansätze aufweist, die in zugeordnete, an die Ausnehmung seitlich anschließende Aussparungen im Wellenkörper eingreifen.

Nach einem bevorzugten Ausführungsbeispiel der Erfindung kann die unlösbare Verbindung durch eine Verschweißung von Gurtstift und Gurtband hergestellt sein, wobei nach Ausführungsbeispielen der Erfindung die Verschweißung zwischen dem Gurtstift und dem Gurtband durch Reibschweißen oder durch Ultraschallschweißen oder durch weitere geeignete Schweißverfahren hergestellt sein kann; hierbei sind für Gurtband und Gurtstift zweckmäßig gleichartige Kunststoffwerkstoffe vorzusehen. Alternativ zu der Herstellung der unlösbaren Verbindung zwischen Gurtstift und Gurtband durch Herstellung einer Verschweißung kann die unlösbare Verbindung auch durch Verkleben von Gurtband und Gurtstift herbeigeführt sein.

In der Zeichnung sind Ausführungsbeispiele der Erfindung gegeben; es zeigen:
- Fig. 1: in einer Einzeldarstellung den Wellenkörper einer Gurtwelle mit Gurtstift und Gurtschlaufe im Schnitt,
- Fig. 2: den Gegenstand der Fig. 1 in einer anderen Ausführungsform,
- Fig. 3: den Wellenkörper mit eingelegtem Gurtstift in einer Frontansicht.

Bei den in der Zeichnung dargestellten Ausführungsbeispielen ist das Gurtband 11 an einem Wellenkörper 10 dadurch festgelegt, daß das in eine Gurtbandschlaufe 17 gelegte Gurtband von der einen Seite des Wellenkörpers 10 durch einen in dem Wellenkörper 10 ausgebildeten Wellenschlitz 13 geführt und auf der gegenüberliegenden Seite durch einen in die Gurtbandschlaufe 17 eingelegten Gurtstift 12 gegen Herausrutschen aus dem Wellenschlitz 13 gesichert ist. Der Wellenschlitz mündet dabei in eine in die Kontur des Wellenkörpers 10 eingezogene Ausnehmung 14, die zur versenkten Aufnahme des Gurtstiftes 12 in dem Wellenkörper 10 dient. Der Gurtstift 12 weist bei den dargestellten Ausführungsbeispielen einen quadratischen Vierkantquerschnitt auf und ist in seiner in die Ausnehmung 14 eingebrachten Lage derart orientiert, daß der Gurtstift mit einer Ecke zum Wellenschlitz 13 weist. Zum verdrehgesicherten Festlegen des Gurtstiftes in der Ausnehmung 14 weist die Ausnehmung 14 zwei winklig zum Wellenschlitz 13 ausgerichtete und in ihrem Winkel auf die anliegenden Flächen des Gurtstiftes 12 angepaßte Begrenzungsflächen 15, 16 auf, wobei mit dem Bezugszeichen 15 diejenige Begrenzungsfläche bezeichnet ist, die dem Gurtbandtrum 19 der Gurtbandschlaufe 17 zugeordnet ist, welches beim Gebrauch des Sicherheitsgurtaufrollers die am Gurtband 11 angreifende Last trägt, während die Begrenzungsfläche 16 dem unbelasteten, freien Ende 18 der Gurtbandschlaufe 17 zugeordnet ist, welche bei der Bildung der Gurtbandschlaufe 17 in den Wellenschlitz 13 zurückgeführt ist.

Bei den dargestellten Ausführungsbeispielen ist zur Befestigung der Gurtbandschlaufe 17 an dem Gurtstift 12 die dem freien Ende 18 der Gurtbandschlaufe 17 zugeordnete und gegen die Begrenzungsfläche 16 der Ausnehmung 14 liegende Fläche 20 des Gurtstiftes 12 zur Herstellung einer unlösbaren Verbindung mit dem Gurtbandmaterial verschweißt, wobei diese Verschweißung 25 beispielsweise durch Reibschweißen oder durch Ultraschallschweißen hergestellt sein kann. Dabei erfolgt die Verschweißung des Gurtstiftes 12 mit dem Gurtband 11 vor dem Einschlaufen des Gurtbandes; hierzu liegt das Gurtband gestreckt flach aus und wird mit dem Gurtstift 12 in einem entsprechenden Abstand zum freien Ende des Gurtbandes verschweißt. Alsdann wird das freie Ende des Gurtbandes um den Gurtstift zur Schlaufenbildung gelegt. Die Belastung der Fläche mit der Verschweißung 25 bei einer auftretenden Gurtlast ist dadurch vermindert, daß aufgrund des bis zur Fläche 20 gegebenen Umschlingungswinkels der Gurtbandschlaufe 17 um den Gurtstift 12 nach der Gesetzmäßigkeit der Seilreibungsformel die an der Fläche 20 noch auftretende Gurt-Reaktionskraft im freien Ende 18 der Gurtbandschlaufe entsprechend verringert ist. Zusätzlich erfolgt bei einer auftretenen Gurtlast ein Hineinziehen des Gurtstiftes 12 in die Ausnehmung 14, so daß es zu einer entsprechenden Flächenpressung an den Begrenzungsflächen 15,16 der Ausnehmung 14 und der daran anliegenden Fläche des Gurtstiftes 12 kommt, und auch durch diese Flächenpressung wird die Reibung vergrößert, so daß die im freien Ende 18 der Gurtbandschlaufe 17 noch wirkende Kraft weiterhin verringert ist.

Wie nicht weiter dargestellt können auch weitere Flächen des Gurtstiftes 12, insbesondere die an die Fläche 20 anschließende, nach außen weisende Fläche mit dem Gurtbandmaterial verschweißt sein. Weiterhin kann vorgesehen sein, daß in dem Anlagebereich zwischen dem freien Ende 18 der Gurtbandschlaufe 17 und dem im Bereich des Wellenschlitzes 13 dagegen liegenden belasteten Gurtbandtrum 19 eine Verschweißung des Gurtbandmaterials miteinander vorgenommen ist, wobei sich die Verschweißung auf einen zentralen Bereich der gegeneinanderliegenden Gurtbandflächen richtet, während an den Außenseiten des Gurtbandverlaufes längslaufende äußere Randbereiche ausgespart sind, so daß mit dieser Ausgestaltung die Stabilität der Verbindung der Gurtbandschlaufe durch die das Gurtbandmaterial beanspruchende Verschweißung geringstmöglich beeinträchtigt ist.

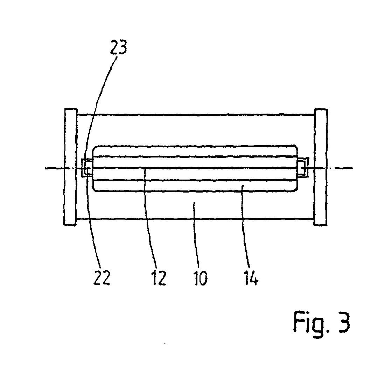

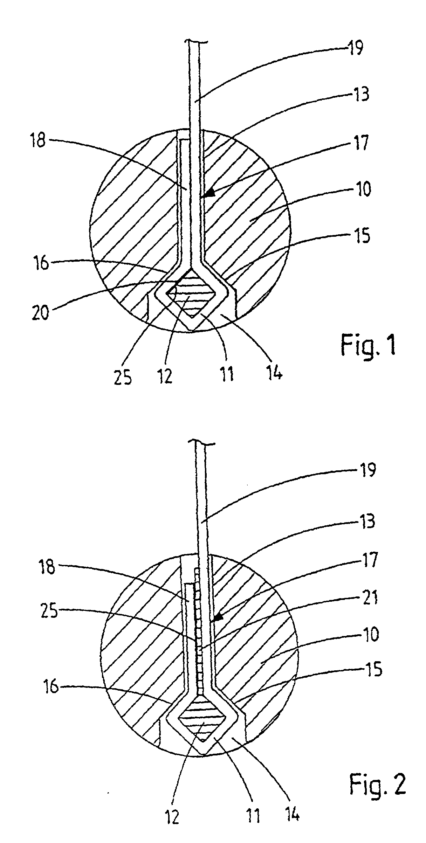

Bei dem in Fig. 2 dargestellten Ausführungsbeispiel weist der Gurtstift 12 einen sich in den Wellenschlitz 13 erstreckenden fahnenartigen Fortsatz 21 als Schweißfläche und weitere Verdrehsicherung und Abstützung bei der Kraftübernahme auf, wobei der fahnenartige Fortsatz 21 zwischen den Gurtbandlagen des freien Endes 18 und des belasteten Gurtbandes 19 der Gurtbandschlaufe 17 zu liegen kommt.

Schließlich kann zur weiteren Festlegung des Gurtstiftes 12 in dem Wellenkörper 11 entsprechend der Darstellung in Fig. 3 noch vorgesehen sein, daß der Gurtstift 12 an seinen beiden äußeren Enden mit über die Breite der im Wellenkörper 10 befindlichen Ausnehmung 14 hinaus sich seitlich erstreckenden Ansätzen versehen ist, wobei diesen Ansätzen 22 des Gurtstiftes 12 in dem Wellenkörper 10 beiderseits der Ausnehmung 14 Aussparungen 23 zugeordnet sind, in denen die seitlichen Ansätze 22 des Gurtstiftes 12 in einer versenkten Anordnung zu liegen kommen. Durch eine entsprechende Profilierung der Ansätze 22 bzw. der Aussparungen 23 ist eine weitere verdrehgesicherte Abstützung des Gurtstiftes 12 in dem Wellenkörper 10 gegeben, wobei auch hierdurch die Belastung der Verschweißung 25 zwischen Gurtstift 12 und Gurtband 11 verringert ist.

Anstelle der Verschweißung kann zur Herstellung der gewünschten unlösbaren Verbindung auch eine Verklebung von Gurtstift und Gurtbandmaterial ausgeführt sein.

Die erfindungsgemäße Wirkung kann auch dadurch erzielt werden, daß alternativ zu der Verschweißung oder der Verklebung des Gurtstiftes mit dem Gurtband an den jeweiligen Flächen eine mechanische Verbindung ausgeführt ist.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Sicherheitsgurtaufroller mit Gurtaufwickelwelle und daran festgelegtem Gurtband (11), wobei das endseitig in eine Schlaufe (17) gelegte Gurtband (11) mit seiner Schlaufe (17) durch einen in dem Wellenkörper (10) ausgebildeten Wellenschlitz (13) geführt und mittels eines in die Schlaufe (17) eingelegten, einen eckigen Querschnitt aufweisenden und in eine in die Kontur des Wellenkörpers (10) eingezogene Ausnehmung (14) eingelegten Gurtstiftes (12) festgelegt ist, und wobei die Ausnehmung (14) des Wellenkörpers (10) zwei winklig zum Wellenschlitz (13) ausgerichtete und in ihrem Winkel auf die anliegenden Flächen des in der Ausnehmung (14) mit einer zum Wellenschlitz (13) weisenden Ecke eingelegten Gurtstiftes (12) angepaßte Begrenzungsflächen (15, 16) zur verdrehgesicherten Festlegung des Gurtstiftes (12) aufweisen, **dadurch gekennzeichnet, daß** der Gurtstift (12) an seiner vom in den Wellenschlitz (13) zurückgeführten freien Ende (18) der Gurtbandschlaufe (17) umschlungenen Fläche (20) eine unlösbare Verbindung mit dem Gurtband (11) aufweist und die die Verbindung mit dem Gurtband (11) aufweisende Fläche (20) des Gurtstiftes (12) an der dem die Gurtbandlast aufnehmenden Gurtbandtrum (19) abgewandten Begrenzungsfläche (16) der Ausnehmung (14) anliegt.

2. Sicherheitsgurtaufroller nach Anspruch 1, **dadurch gekennzeichnet, daß** der Gurtstift (12) einen dreieckigen Querschnitt aufweist.

3. Sicherheitsgurtaufroller nach Anspruch 1, **dadurch gekennzeichnet, daß** der Gurtstift (12) einen Vierkantquerschnitt aufweist.

4. Sicherheitsgurtaufroller nach Anspruch 1, **dadurch gekennzeichnet, daß** der Gurtstift (12) einen rautenförmigen Querschnitt mit einer Orientierung der den spitzen Winkel der Raute einschließenden Ecke zum Wellenschlitz (13) aufweist.

5. Sicherheitsgurtaufroller nach einem der Ansprüche 1 bis 4, **dadurch gekennzeichnet, daß** zusätzlich zu der die Verbindung mit dem Gurtband (11) aufweisenden Fläche (20) weitere Flächen des Gurtstiftes (12) eine unlösbare Verbindung mit dem ihn umschlingenden Gurtband (11) aufweisen.

6. Sicherheitsgurtaufroller nach einem der Ansprüche 1 bis 5, **dadurch gekennzeichnet, daß** das in den Wellenschlitz (13) zurückgeführte freie Ende (18) der Gurtbandschlaufe (17) eine unlösbare Verbindung mit dem die Gurtbandlast aufnehmenden Gurtbandtrum (19) im Bereich einer beiderseits der Längsmittenlinie des Gurtbandes unter Aussparung von längslaufenden Bereichen angeordneten Teilfläche aufweist.

7. Sicherheitsgurtaufroller nach einem der Ansprüche 1 bis 5, **dadurch gekennzeichnet, daß** der Gurtstift (12) einen in den Wellenschlitz (13) und zwischen das freie Ende (18) und das belastete Gurtbandtrum (19) der Gurtbandschlaufe (17) reichenden fahnenartigen Fortsatz (21) aufweist.

8. Sicherheitsgurtaufroller nach Anspruch 7, **dadurch gekennzeichnet, daß** der fahnenartige Fortsatz (21) eine unlösbare Verbindung mit dem freien Ende (18) der Gurtbandschlaufe (17) aufweist.

9. Sicherheitsgurtaufroller nach Anspruch 8, **dadurch gekennzeichnet, daß** der fahnenartige Fortsatz (21) an einer beiderseits der Längsmittenlinie des Gurtbandes unter Aussparung von längslaufenden äußeren Randbereichen angeordneten Teilfläche eine unlösbare Verbindung mit dem Gurtband aufweist.

10. Sicherheitsgurtaufroller nach einem der Ansprüche 7 bis 9, **dadurch gekennzeichnet, daß** sowohl an dem Gurtstift (12) als auch an dem fahnenartigen Fortsatz (21) eine unlösbare Verbindung mit dem Gurtband ausgeführt ist.

11. Sicherheitsgurtaufroller nach einem der Ansprüche 1 bis 10, **dadurch gekennzeichnet, daß** der Gurtstift (12) an seinen beiden äußeren Enden über die Breite der im Wellenkörper (10) befindlichen Ausnehmung (14) seitlich vorstehende Ansätze (22) aufweist, die in zugeordnete, an die Ausnehmung (14) seitlich anschließende Aussparungen (23) im Wellenkörper (10) eingreifen.

12. Sicherheitsgurtaufroller nach einem der Ansprüche 1 bis 11, **dadurch gekennzeichnet, daß** die unlösbare Verbindung durch eine Verschweißung von Gurtstift (12) und Gurtband (11) hergestellt ist.

13. Sicherheitsgurtaufroller nach einem der Ansprüche 1 bis 12, **dadurch gekennzeichnet, daß** die Verschweißung zwischen Gurtstift (12) und Gurtband (11) durch Reibschweißen hergestellt ist.

14. Sicherheitsgurtaufroller nach einem der Ansprüche 1 bis 12, **dadurch gekennzeichnet, daß** die Verschweißung zwischen Gurtstift (12) und Gurtband (11) durch Ultraschallschweißen hergestellt ist.

15. Sicherheitsgurtaufroller nach einem der Ansprüche 1 bis 11, **dadurch gekennzeichnet, daß** die unlösbare Verbindung durch ein Verkleben von Gurtstift (12) und Gurtband (11) hergestellt ist.

16. Sicherheitsgurtaufroller nach einem der Ansprüche 12 bis 15, **gekennzeichnet durch** gleichartige Kunststoffwerkstoffe für Gurtband (11) und Gurtstift (12).

## Claims

1. A safety belt retractor with a belt retraction shaft and a belt strap (11) fixed thereon, the belt strap (11), which is formed into a loop (17) at the end being passed with its loop (17) through a shaft slot (13) formed in the shaft body (10) and being fixed by a belt pin (12) which is inserted into the loop (17), has an angular cross-section, and is placed in a recess (14) formed in the contour of the shaft body (10), and wherein the recess (14) in the shaft body (10) has two boundary surfaces (15, 16) to fix the belt pin (12) so that it is secured against rotation, said boundary surfaces (15, 16) being aligned at an angle to the shaft slot (13) and being adapted, in their angle, to the adjoining surfaces of the belt pin (12) inserted in the recess (14) with a corner pointing towards the shaft slot (13), **characterised in that** the belt pin (12) has, at its surface (20) around which is wrapped the free end (18) of the belt strap loop (17), which free end is passed back into the shaft slot (13), a non-releasable connection to the belt strap (11) and the surface (20) of the belt pin (12) having the connection to the belt strap (11) bears against that boundary surface (16) of the recess (14) which is remote from the belt strap run (19) taking the belt strap load.

2. A safety belt retractor according to claim 1, **characterised in that** the belt pin (12) has a triangular cross-section.

3. A safety belt retractor according to claim 1, **characterised in that** the belt pin (12) has a square cross-section.

4. A safety belt retractor according to claim 1, **characterised in that** the belt pin (12) has a diamond shaped cross-section with an orientation of the corner including the acute angle of the diamond towards the shaft slot (13).

5. A safety belt retractor according to any one of claims 1 to 4, **characterised in that** in addition to the surface (20) having the connection to the belt strap (11) other surfaces of the belt pin (12) have a non-releasable connection to the belt strap (11) surrounding it.

6. A safety belt retractor according to any one of claims 1 to 5, **characterised in that** the free end (18) of the belt strap loop (17) passed back into the shaft slot (13) has a non-releasable connection to the belt strap run (19) taking the belt strap load in the region of a part-surface disposed on either side of the longitudinal centre-line of the belt strap, longitudinally extending zones being recessed.

7. A safety belt retractor according to any one of claims 1 to 5, **characterised in that** the belt pin (12) has a flag-like continuation (21) extending into the shaft slot (13) and between the free end (18) and the loaded belt strap run (19) of the belt strap loop (17).

8. A safety belt retractor according to claim 7, **characterised in that** the flag-like continuation (21) has a non-releasable connection to the free end (18) of the belt strap loop (17).

9. A safety belt retractor according to claim 8, **characterised in that** the flag-like continuation (21) has a non-releasable connection to the belt strap at a part-surface disposed on either side of the longitudinal centre-line of the belt strap, longitudinally extending outer edge zones being recessed.

10. A safety belt retractor according to any one of claims 7 to 9, **characterised in that** a non-releasable connection to the belt strap is made both at the belt pin (12) and at the flag-like continuation (21).

11. A safety belt retractor according to any one of claims 1 to 10, **characterised in that** at its two outer ends the belt pin (12) has laterally projecting attachments (22) over the width of the opening (14) disposed in the shaft body (10), said attachments engaging in associated recesses (23) in the shaft body (10), said recesses (23) laterally adjoining the opening (14).

12. A safety belt retractor according any one of claims 1 to 11, **characterised in that** the non-releasable connection is made by welding the belt pin (12) and the belt strap (11).

13. A safety belt retractor according to any one of claims 1 to 12, **characterised in that** the weld between the belt pin (12) and the belt strap (11) is made by friction welding.

14. A safety belt retractor according to any one of claims 1 to 12, **characterised in that** the weld between the belt pin (12) and the belt strap (11) is made by ultrasonic welding.

15. A safety belt retractor according to any one of claims 1 to 11, **characterised in that** the non-releasable connection is made by sticking the belt pin (12) and the belt strap (11).

16. A safety belt retractor according to any one of claims 12 to 15, **characterised by** identical plastic materials for the belt strap (11) and the belt pin (12).

## Revendications

1. Enrouleur pour ceinture de sécurité comprenant une bobine d'enroulement et une bande de ceinture (11) fixée contre celle-ci, la bande de ceinture (11), pliée sur une extrémité en forme de boucle (17), étant guidée avec sa boucle (17) à travers une fente (13) réalisée dans un corps de broche (10) et étant fixée au moyen d'une goupille (12) à section polygonale, insérée dans la boucle (17) et logée dans une cavité (14) réalisée dans le contour du corps de broche (10), et la cavité (14) du corps de broche (10) étant munie de deux surfaces de délimitation (15, 16), qui sont destinées à bloquer la goupille (12) de manière à ne pas tourner et qui sont orientées en formant un angle avec la fente (13) de la broche et, par l'angle formé, adaptées aux surfaces adjacentes de la goupille (12), insérée dans la cavité (14) et dont un coin est dirigé vers la fente (13) de la broche, **caractérisé en ce que**, sur sa face (20) entourée par l'extrémité libre (18) de la boucle de ceinture (17) à nouveau enfilée dans la fente (13) de la broche, la goupille (12) forme un assemblage inamovible avec la bande de ceinture (11), et la surface (20) de la goupille (12), assemblée avec la bande de ceinture (11), est en appui contre la surface de délimitation (16) de la cavité (14) opposée au tronçon de ceinture (19) sollicité par la charge de la ceinture.

2. Enrouleur pour ceinture de sécurité selon la revendication 1, **caractérisé en ce que** la goupille (12) présente une section triangulaire.

3. Enrouleur pour ceinture de sécurité selon la revendication 1, **caractérisé en ce que** la goupille (12) présente une section carrée.

4. Enrouleur pour ceinture de sécurité selon la revendication 1, **caractérisé en ce que** la goupille (12) présente une section en forme de losange, orientée avec le coin formant l'angle aigu du losange vers la fente (13) de la broche.

5. Enrouleur pour ceinture de sécurité selon l'une des revendications 1 à 4, **caractérisé en ce que**, en plus de la surface (20) formant un assemblage avec la bande de ceinture (11), d'autres surfaces de la goupille (12) forment un assemblage inamovible avec la bande de ceinture (11) entourant celle-ci.

6. Enrouleur pour ceinture de sécurité selon l'une des revendications 1 à 5, **caractérisé en ce que** l'extrémité libre (18) de la boucle (17), à nouveau enfilée dans la fente (13) de la broche, forme un assemblage inamovible avec le tronçon de ceinture (19) sollicité par la charge de la ceinture, dans la zone d'une surface partielle disposée de part et d'autre de la ligne médiane longitudinale de la bande de ceinture en formant des évidements longitudinaux.

7. Enrouleur pour ceinture de sécurité selon l'une des revendications 1 à 5, **caractérisé en ce que** la goupille (12) est munie d'un prolongement (21) en forme de queue, qui s'engage dans la fente (13) de la broche et entre l'extrémité libre (18) et le tronçon de ceinture sollicité (19) de la boucle (17).

8. Enrouleur pour ceinture de sécurité selon la revendication 7, **caractérisé en ce que** le prolongement (21) en forme de queue forme un assemblage inamovible avec l'extrémité libre (18) de la boucle (17).

9. Enrouleur pour ceinture de sécurité selon la revendication 8, **caractérisé en ce que** le prolongement (21) en forme de queue forme un assemblage inamovible avec la bande de ceinture dans une zone d'une surface partielle disposée de part et d'autre de la ligne médiane longitudinale de la bande de ceinture en formant des évidements longitudinaux.

10. Enrouleur pour ceinture de sécurité selon l'une des revendications 7 à 9, **caractérisé en ce qu'**il est prévu un assemblage inamovible avec la bande de ceinture non seulement au niveau de la goupille (12), mais aussi au niveau du prolongement (21) en forme de queue.

11. Enrouleur pour ceinture de sécurité selon l'une des revendications 1 à 10, **caractérisé en ce que** la goupille (12), sur ses deux extrémités extérieures, comporte des saillies (22) qui s'avancent latéralement sur toute la largeur de la cavité (14) réalisée dans le corps de broche (10).

12. Enrouleur pour ceinture de sécurité selon l'une des revendications 1 à 11, **caractérisé en ce que** l'assemblage inamovible est formé par soudage entre la goupille (12) et la bande de ceinture (11).

13. Enrouleur pour ceinture de sécurité selon l'une des revendications 1 à 12, **caractérisé en ce que** l'assemblage soudé entre la goupille (12) et la bande de ceinture (11) est obtenu par soudage par friction.

14. Enrouleur pour ceinture de sécurité selon l'une des revendications 1 à 12, **caractérisé en ce que** l'assemblage soudé entre la goupille (12) et la bande de ceinture (11) est obtenu par soudage par ultrasons.

15. Enrouleur pour ceinture de sécurité selon l'une des revendications 1 à 11, **caractérisé en ce que** l'assemblage inamovible est formé par collage entre la goupille (12) et la bande de ceinture (11).

16. Enrouleur pour ceinture de sécurité selon l'une des revendications 12 à 15, **caractérisé par** des matières plastiques de même nature pour la bande de ceinture (11) et la goupille (12).
